Europäisches Patentamt

**European Patent Office**

Office européen des brevets

(19)

(11) Numéro de publication : **0 006 478**

**B1**

(12)

# FASCICULE DE BREVET EUROPÉEN

(45) Date de publication du fascicule du brevet :
07.04.82

(21) Numéro de dépôt : **79101713.0**

(22) Date de dépôt : **01.06.79**

(51) Int. Cl.³ : **G 06 F 13/00**, G 06 F   9/06

(54) **Dispositif programmable de verrouillage de signaux de commande dans un système de traitement de données.**

(30) Priorité : **23.06.78 US 918223**

(43) Date de publication de la demande :
**09.01.80 (Bulletin 80/01)**

(45) Mention de la délivrance du brevet :
**07.04.82 Bulletin 82/14**

(84) Etats contractants désignés :
**BE CH DE FR GB NL SE**

(56) Documents cités :
**US - A - 395 392**
**Heinz Schecher, « Funktioneller Aufbau digitaler Rechenanlagen »,**
**1973, pages 71 à 74, 194 à 197 .**
**IEEE Journal of Solid**
**State Circuits, octobre 1973,**
**page 358**

(73) Titulaire : **International Business Machines Corporation**

**Armonk, N.Y. 10504 (US)**

(72) Inventeur : **Fairchild, Peter Tappen**
**4790 Fox Hunt Trail**
**Boca Raton Florida 33431 (US)**
Inventeur : **Leininger, Joel Calvin**
**601 Northwest 7th Street**
**Boca Raton Florida 33432 (US)**

(74) Mandataire : **Dematte, Roland**
**COMPAGNIE IBM FRANCE Département de Propriété Industrielle**
**F-06610 - La Gaude (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Dispositif programmable de verrouillage de signaux de commande dans un système de traitement de données

Description

Domaine technique de l'invention

L'invention concerne un dispositif programmable de verrouillage de signaux de commande dans un système de traitement de données.

Des circuits de verrouillage de signaux de commande sont commandés à l'aide d'une seule instruction pour permettre au système de réaliser des fonctions diverses de commandes internes et/ou externes.

Etat et appréciation de la technique

Les systèmes de traitement de données actuels sont formés de microplaquettes à circuits intégrés du type LSI (Intégration à haute densité). L'objectif normal est de disposer tous les circuits sur un nombre de microplaquettes aussi faible que possible. En raison des limitations de volume et des compromis qui doivent être acceptés pour disposer ces circuits et leur câblage sur une microplaquette particulière, les systèmes réalisés actuellement présentent des possibilités quelque peu limitées en ce qui concerne le volume de mémoire qui peut être adressé et le nombre de fonctions de commande internes et externes indépendantes et de fonctions de sélection qui peuvent être assurées.

La capacité d'adressage de mémoire d'un microprocesseur constitue un bon exemple du problème considéré. Comme pour tous les processeurs, une décision doit être prise en ce qui concerne le nombre de bits dans une instruction qui seront attribués à des fins d'adressage de mémoire. Plus grand est le nombre de bits dans une adresse de mémoire, plus grand est le volume de mémoire pouvant être adressé. Cependant, plus grand est le nombre de bits d'adressage, plus grande est la quantité de circuits qui doit être prévue à des fins d'adressage. Aussi, dans le cas des microprocesseurs, choisit-on généralement une adresse de mémoire ayant un nombre relativement faible de bits par comparaison aux pratiques antérieures concernant des processeurs de dimensions plus importantes. Un choix plus ou moins classique consiste à utiliser une adresse de mémoire à 12 bits. Ceci permet l'adressage direct d'un nombre de positions de mémoire pouvant atteindre 4096. Il ne s'agit pas là d'un volume d'emmagasinage très important et, dans de nombreuses applications, il serait souhaitable d'assurer au microprocesseur une capacité d'emmagasinage bien plus importante et d'augmenter indirectement le nombre de bits d'adresse disponibles pour adresser la mémoire.

Il est par ailleurs connu d'utiliser des circuits délivrant des signaux de commande internes ou externes diverses dans les systèmes de traitement de données. De tels circuits sont décrits par exemple dans le manuel IBM intitulé « IBM System/370 — Principles of Operation. GA 22.7000.3 — pages 9-30-32 ». Les registres de commande (control registers) décrits dans ce manuel comportent un certain nombre de positions de bits assignées à diverses commandes du système et utilisées pour spécifier si une certaine opération peut être effectuée ou pour fournir une information spéciale relative à la commande concernée. Ces registres de commande peuvent être chargés à partir de la mémoire principale au moyen d'une instruction de commande de chargement sans qu'il soit possible de modifier un bit particulier indépendamment des autres.

Le brevet US-A-3 395 392, délivré le 30 juillet 1968, décrit un dispositif programmable de verrouillage de signaux de commande d'adressage de mémoire dans un système de traitement de données pourvu d'au moins deux unités de mémoire ou de deux parties d'une mémoire. Ce dispositif comporte un certain nombre de circuits de verrouillage bistables à deux entrées commandés par les signaux binaires de sortie d'un registre A contenant un caractère modificateur lorsqu'une instruction spéciale est décodée au cours de l'exécution du programme du système.

Chacune des deux entrées d'un circuit de verrouillage est reliée à la sortie d'un circuit logique ET à deux entrées. Le premier circuit ET reçoit sur sa première entrée un signal binaire d'une position de bit prédéterminée du registre A pour faire basculer le circuit de verrouillage. Le deuxième circuit ET reçoit sur sa première entrée un signal binaire d'une autre position de bit prédéterminée du registre A pour remettre à zéro le circuit de verrouillage. Suivant la valeur binaire du signal binaire reçu du registre A, l'un ou l'autre des deux circuits ET est activé lorsqu'une instruction spéciale est détectée dans le registre d'opération du système, provoquant l'apparition d'un signal binaire sur la deuxième entrée des premier et deuxième circuits ET.

Chaque circuit de verrouillage comporte deux sorties, chacune étant connectée à la première entrée d'un autre circuit ET à deux entrées délivrant des signaux de commande aux circuits d'adressage des unités de mémoire. La deuxième entrée de ces circuits ET reçoit les signaux de chronologie du système.

Chaque circuit de verrouillage bistable décrit dans ce brevet exige donc un circuit logique ET sur chacune de ses deux entrées et chacune de ses deux sorties soit au total quatre circuits logiques ET.

Exposé de l'invention

La présente invention, telle qu'elle est caractérisée dans les revendications, permet de réduire considérablement le nombre de circuits logiques dans un dispositif programmable de verrouillage de signaux de commande.

Chacun des circuits de verrouillage utilisés dans ce dispositif n'exige qu'un seul circuit logique ET sur l'une seulement de ses deux entrées.

L'invention utilise un circuit de verrouillage bistable à deux entrées, l'une recevant un signal de données binaire, l'autre un signal de chargement commandant le chargement, dans le circuit de verrouillage, du signal de données binaire. La sortie de ce circuit de verrouillage délivre au moins un signal de commande au système de traitement de données.

Des circuits de liaison relient chacune des entrées de données des circuits de verrouillage à une position d'un premier de deux groupes de positions de bits prédéterminées du registre d'instruction.

Chacune des entrées de chargement des circuits de verrouillage est pourvue d'un circuit logique ET à trois entrées. La première entrée est reliée à une position du deuxième groupe de positions de bits prédéterminées du registre d'instruction, la deuxième entrée étant reliée au décodeur décodant le code d'opération de l'instruction contenue dans le registre d'instruction, la troisième entrée recevant un signal de chronologie. La sortie de chacun de ces circuits ET est connectée à l'entrée de chargement d'un circuit de verrouillage correspondant de telle sorte qu'à un moment prédéterminé du cycle-machine du système les circuits de verrouillage désignés par les positions du deuxième groupe de positions binaires du registre d'instruction sont chargés avec les valeurs binaires désignées par les positions correspondantes du premier groupe de positions binaires quand un code d'opération prédéterminé est décodé par le décodeur.

L'invention permet de réaliser un dispositif programmable de verrouillage de signaux de commande, de construction relativement simple et permettant d'élargir les possibilités de commande et d'adressage dans un système de traitement de données.

L'invention fournit donc un dispositif de verrouillage de signaux de commande réduisant les limitations ou les insuffisances de l'art antérieur d'une manière efficace et souple et avec un minimum de circuits.

L'invention fournit un dispositif de commande nouveau et amélioré pouvant être utilisé, par exemple, pour accroître le volume d'adressage de mémoire d'un processeur au-delà du volume maximum adressable par l'adresse de mémoire, ce volume maximum étant limité par la longueur de l'adresse de mémoire (c'est-à-dire le nombre de bits d'adresse) utilisée par les diverses instructions du programme. Avec ce dispositif, le volume d'adressage de mémoire peut être multiplié par 2, 4, 8 ou 16 avec peu de circuits rajoutés et très peu d'effets sur les performances du processeur.

L'invention peut également être utilisée dans les processeurs de données pour assurer diverses fonctions de commande internes ou externes d'une manière plus économique et plus efficace que dans les systèmes de l'art antérieur.

La présente invention concerne les dispositifs de commande et les dispositifs d'adressage de mémoire dans les systèmes de traitement de données et, bien que n'étant pas limitée à cette utilisation, plus particulièrement dans les microprocesseurs et les micro-unités de commande et autres dispositifs similaires.

D'autres objets et avantages de la présente invention ressortiront mieux de l'exposé qui suit, fait en référence aux dessins annexés à ce texte, qui représentent un mode de réalisation préféré de celle-ci.

Brève description des dessins

La figure 1 est un schéma-bloc d'une première réalisation d'un dispositif de verrouillage de commande programmable réalisé selon la présente invention.

Les figures 2 et 3 sont des schémas de circuits logiques montrant différentes formes de construction représentatives qui peuvent être utilisées pour les circuits de verrouillage de la figure 1.

La figure 4 est une représentation simplifiée d'un microprocesseur à haute performance amélioré.

La figure 5 montre comment la présente invention peut être appliquée au microprocesseur de la figure 4 pour permettre l'adressage de quatre fois plus de mémoire principale que dans le dispositif de la figure 4.

La figure 6 est un schéma chronologique utilisé pour l'explication du fonctionnement de la réalisation de la figure 5, et

La figure 7 représente une autre réalisation possible d'un dispositif de verrouillage de commande programmable réalisé selon la présente invention.

Description de modes de réalisation de l'invention

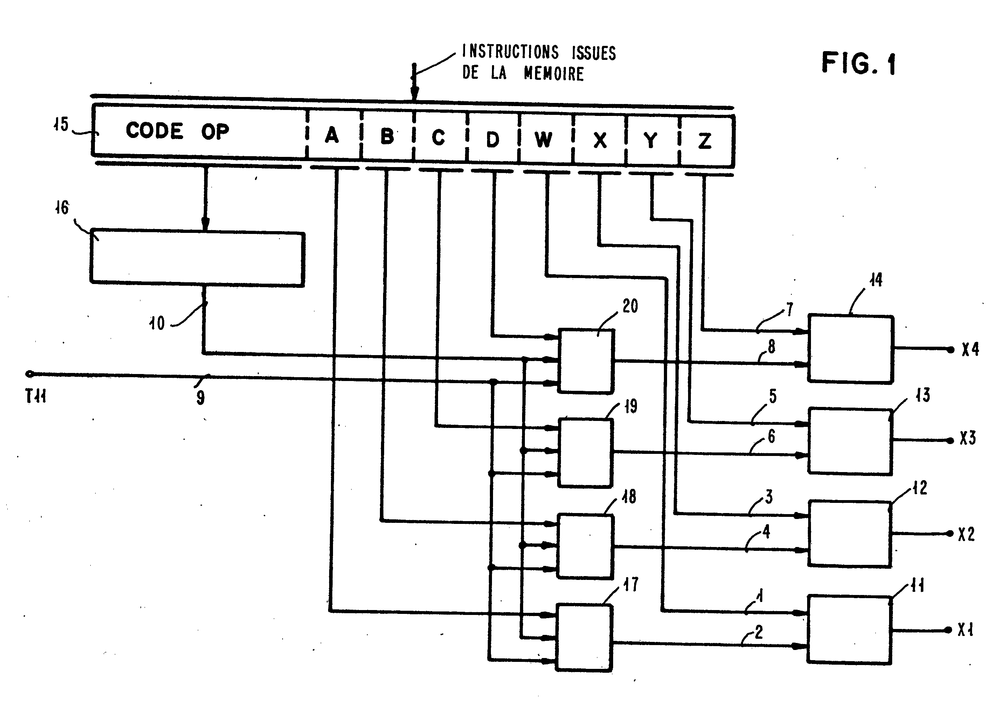

Sur la figure 1 est représenté un dispositif programmable de verrouillage de signaux de commande réalisé selon la présente invention pour délivrer divers signaux de commande pour un système de traitement de données. Le terme « commande » est utilisé ici dans son sens le plus large et, entre autres choses, comprend la commande d'adressage de mémoire et de sélection de zones de mémoire. Ce dispositif programmable de verrouillage de signaux de commande est réalisé pour être utilisé dans un système de traitement de données qui comprend divers éléments de transfert de données pour la manipulation des signaux de données, une unité d'emmagasinage ou mémoire ou encore un sous-système d'emmagasinage pour l'emmagasinage d'instructions et de données, un registre d'adresse de mémoire pour l'adressage de l'unité d'emmagasinage, un registre d'instruction pour la réception des instructions extraites de l'unité d'emmagasinage et des circuits de commande couplés au registre d'instruction pour commander les élé-

ments de transfert de données et la lecture des instructions à partir de l'unité d'emmagasinage.

Le dispositif programmable de verrouillage de signaux de commande de la figure 1 comprend plusieurs circuits de verrouillage 11, 12, 13 et 14. Chacun de ces circuits de verrouillage 11, 12, 13 et 14 comprend une entrée de données, 1, 3, 5 ou 7, pour la réception d'un signal de données binaire, et une entrée de chargement, 2, 4, 6 ou 8, pour la réception d'un signal de chargement provoquant le chargement du signal de données binaire dans le circuit de verrouillage et au moins une sortie délivrant un signal de commande pour le système de traitement de données. Les sorties sont référencées X1, X2, X3 et X4, respectivement. Le dispositif de verrouillage de commande comprend également des circuits pour le couplage des entrées de données des circuits de verrouillage 11, 12, 13 et 14 à des positions de bits particulières d'un premier ensemble de positions de bit d'un registre d'instruction 15. Ce premier ensemble de positions de bits est représenté par les positions de bits W, X, Y et Z. La position de bit W est couplée au circuit de verrouillage 11, la position de bit X au circuit de verrouillage 12, la position de bit Y au circuit de verrouillage 13 et la position Z au circuit de verrouillage 14. Les positions de bits W, X, Y et Z fournissent les valeurs binaires qui peuvent être chargées dans les circuits de verrouillage respectifs et peuvent être considérées comme formant le champ de données de la partie opérante de la nouvelle instruction décrite ici.

Comme dans tout système de traitement de données, le registre d'instruction 15 reçoit une instruction à la fois de l'unité d'emmagasinage principale du processeur de données. Afin de charger l'un ou plusieurs des circuits de verrouillage 11, 12, 13 et 14, une nouvelle instruction est ajoutée au répertoire d'instructions du processeur de données. Cette instruction peut être appelée « instruction de chargement de verrouillage de commande ». Un code d'opération prédéterminé caractéristique, désigné CODE OP dans le registre 15, est attribué pour distinguer cette instruction des divers autres types d'instructions du répertoire d'instructions. Les autres bits A, B, C, D, W, X, Y et Z de cette instruction de chargement de verrouillage de commande constituent la partie opérande de l'instruction et assure des fonctions « adressage » et « données » caractéristiques particulières associées au mécanisme de verrouillage de commande. En particulier, les bits A à D constituent un champ « adresse » et les bits W à Z constituent un champ « données ».

Le dispositif programmable de verrouillage de signaux de commande de la figure 1 comprend en outre des circuits couplés au registre d'instruction 15 et répondant à l'apparition dans celui-ci d'une instruction comportant le code d'opération « chargement de verrouillage de commande » prédéterminé pour délivrer un signal de chargement à l'entrée de chargement d'un ou de plusieurs circuits de verrouillage 11, 12, 13 et 14. Ce circuit comprend le circuit de décodage 16 couplé au registre d'instruction 15 pour la détection de l'apparition dans celui-ci du code d'opération « chargement de verrouillage de commande ». Lorsque ce code d'opération est détecté, un signal de décodage est généré sur 10 à la sortie du décodeur 16.

Les circuits prévus pour délivrer un signal de chargement comprennent également plusieurs circuits logiques représentés par les circuits ET 17, 18, 19 et 20. Chacun de ces circuits ET 17, 18, 19 et 20 comporte une première entrée qui est couplée à une position de bit particulière dans un deuxième ensemble de positions de bits du registre d'instruction 15. Ce deuxième ensemble de positions de bits est représenté par les positions de bits A, B, C et D qui, comme indiqué, peuvent être considérées comme le champ d'adresse de la partie opérande de la nouvelle instruction. La position de bit A est couplée à la première entrée du circuit ET 17, la position de bit B à la première entrée du circuit ET 18, la position de bit C à la première entrée du circuit ET 19, et la position de bit D à la première entrée du circuit ET 20. Les deuxièmes entrées des circuits ET 17, 18, 19 et 20 sont chacune couplées à la sortie du décodeur 16 pour recevoir le signal de décodage en provenance de ce décodeur.

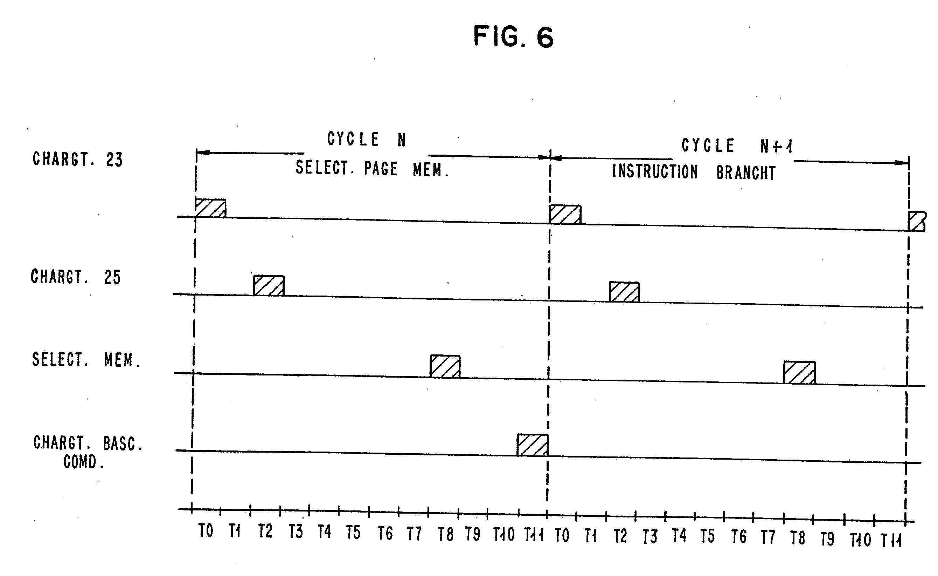

Selon l'usage dans les processeurs de données, le processeur avec lequel le dispositif de verrouillage de commande est utilisé fonctionne par cycles de chronologie répétitifs encore appelés « cycles-machine ». Chacun de ces cycles machine est subdivisé en une série d'intervalles de temps de longueur égale et une impulsion de chronologie est délivrée pour chacun de ces intervalles de temps. A titre d'exemple, on suppose que les cycles-machine du processeur de données sont subdivisés en douze intervalles de temps référencés T0 à T11 comme représenté sur la figure 6. L'une de ces impulsions de chronologie, par exemple l'impulsion de chronologie T11 apparaissant à la fin d'un cycle machine, est délivrée, par l'intermédiaire de 9, à une troisième entrée de chacun des circuits ET 17, 18, 19 et 20. L'avantage de la sélection d'une impulsion de chronologie apparaissant à la fin ou près de la fin du cycle machine sera traité ci-après.

Les sorties des circuits ET 17, 18, 19 et 20 sont couplées aux entrées de chargement des différents circuits de verrouillage 11, 12, 13 et 14. Ainsi, la sortie du circuit ET 17 est couplée à l'entrée de chargement du circuit de verrouillage 11, la sortie du circuit ET 18 à l'entrée de chargement du circuit de verrouillage 12, la sortie du circuit ET 19 à l'entrée de chargement du circuit de verrouillage 13 et la sortie du circuit ET 20 à l'entrée de chargement du circuit de verrouillage 14.

N'importe quel circuit donné des circuits 17, 18, 19 et 20 délivrera un signal de chargement à son circuit de verrouillage correspondant lorsque trois conditions sont simultanément remplies, à savoir, lorsque sa position de bit de registre d'instruction dans l'ensemble A-B-C-D est au niveau « 1 » binaire, lorsque le décodeur 16 détecte une instruction de chargement de verrouillage de commande, et enfin lorsque l'impulsion de chronologie T11 est présente. Ainsi, par exemple, le circuit ET 17 délivrera un signal de chargement au circuit de verrouillage 11 lorsque la position de bit A est au niveau 1, la sortie du décodeur 16 est au niveau 1, et l'impulsion T11 sur 9 est au niveau 1. Si l'une ou plusieurs de ces entrées ne sont pas au niveau 1, aucun signal de chargement ne sera délivré au circuit de verrouillage 11.

Les positions de bit A, B, C et D de l'instruction de chargement de verrouillage de commande déterminent lequel des circuits de verrouillage 11, 12, 13 et 14 sera chargé pendant toute apparition donnée de cette instruction. Les circuits de verrouillage à charger auront une valeur 1 binaire dans leurs positions respectives des positions de bits A, B, C et D. Les circuits de verrouillage qui ne sont pas à charger présenteront un « 0 » binaire dans leurs positions correspondantes des positions A, B, C et D. Si aucun signal de chargement n'est délivré à un circuit de verrouillage, il demeure alors inchangé et garde sa valeur précédente. Si un circuit de verrouillage doit être chargé, la valeur chargée dans celui-ci est déterminée par la valeur binaire de sa position correspondante parmi les positions de bits W, X, Y et Z de l'instruction de chargement de verrouillage de commande. Ainsi, par exemple, si la position de bit W contient une valeur 1 binaire, un signal de chargement à la sortie du circuit ET 17 provoquera alors le chargement d'une valeur « 1 » binaire dans le circuit de verrouillage 11. Inversement, si la position de bit W contient une valeur « 0 » binaire, un signal de chargement apparaissant à la sortie du circuit ET 17 provoquera le chargement d'une valeur « 0 » binaire dans le circuit de verrouillage 11.

Comme on peut le voir d'après ce qui précède, le format de l'instruction de chargement de verrouillage de commande représenté sur la figure 1 permet à un, deux, trois ou quatre circuits quelconques des circuits programmables de verrouillage 11, 12, 13 et 14 d'être modifiés et chaque circuit de verrouillage qui doit être modifié peut être passé soit à l'état « 0 » binaire, soit à l'état « 1 » binaire, comme on le désire. Ceci donne une souplesse considérable au conditionnement et à la restauration de ces bascules programmables de commande 11, 12, 13 et 14. Chaque fois que le programmeur désire modifier une ou plusieurs de ces bascules, il introduit simplement dans le programme une instruction de chargement de verrouillage de commande comportant le codage approprié dans ses positions de bits A, B, C, D, W, X, Y et Z. Lorsque, pendant l'exécution du programme, cette instruction, à son tour, est délivrée au registre d'instruction 15, la bascule ou les bascules désirées seront modifiées de la manière prévue.

Les lignes de sortie X1, X2, X3 et X4 des circuits de verrouillage 11, 12, 13 et 14, respectivement, peuvent être utilisées pour diverses commandes dans le système de traitement de données dans lequel ces bascules sont disposées. Ces circuits de verrouillage peuvent être utilisés pour la sélection de pages de mémoire, la commande directe de dispositifs ou de circuits extérieurs ou la sélection de diverses fonctions internes de processeur. Certains exemples particuliers seront donnés ci-après.

Un avantage de la présente invention réside dans le fait que des bascules différentes parmi ces bascules de commande peuvent être utilisées pour des fonctions de commande complètement différentes dans le système. Ainsi, par exemple, deux des bascules pourraient être utilisées pour la sélection de pages de mémoire tandis qu'une troisième serait utilisée pour la commande d'un dispositif extérieur et une quatrième serait utilisée pour la commande d'une fonction de processeur interne. De plus, étant donné que l'une de ces bascules de commande peut être modifiée sans connaître ou changer l'état des autres bascules de commande, des sections différentes du programme commandant une bascule de commande particulière, peuvent être complètement indépendantes des programmes commandant les autres bascules.

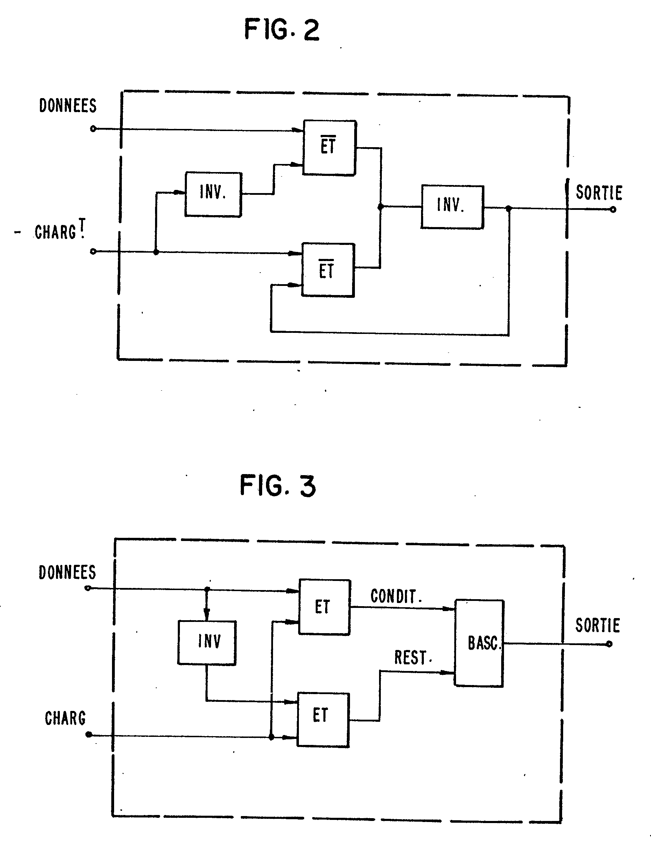

En se reportant maintenant aux figures 2 et 3, on voit que celles-ci représentent deux formes possibles de réalisation qui peuvent être utilisées pour chaque circuit de verrouillage. Le circuit de verrouillage représenté sur la figure 2 utilise des circuits ET et des circuits inverseurs et fonctionne pour verrouiller la ligne de sortie à la même valeur binaire que celle présente sur la ligne d'entrée de données au moment de l'apparition du bord arrière d'une impulsion de chargement négative (-CHARGT) délivrée sur la ligne d'entrée de chargement. Si cette forme de construction est utilisée pour chacun des circuits de verrouillage 11, 12, 13 et 14, les impulsions de chargement négatives peuvent être obtenues, par exemple, en utilisant un circuit ET à la place de chacun des circuits ET 17, 18, 19 et 20. Le circuit de verrouillage représenté dans la figure 3 comprend un circuit de bascule, deux circuits ET et un circuit inverseur. Dans ce cas, une impulsion de chargement positive est utilisée à l'entrée de chargement.

D'autres types de circuits de verrouillage sont décrits dans le brevet n° 1 554 098 et dans le brevet n° 76 15569 (publié le 28 janvier 1977 sous le n° 2 316 803) tous deux déposés en France par la demanderesse les 10 janvier 1968 et 17 mai 1976, respectivement. On notera que l'expression « circuit de verrouillage » telle qu'utilisée ici indique tout circuit ou combinaison de circuits produisant une caractéristique bistable et comprenant une entrée de données pour la réception d'un signal binaire et une entrée de chargement pour la réception d'un signal de chargement provoquant le chargement du signal binaire dans le circuit de verrouillage.

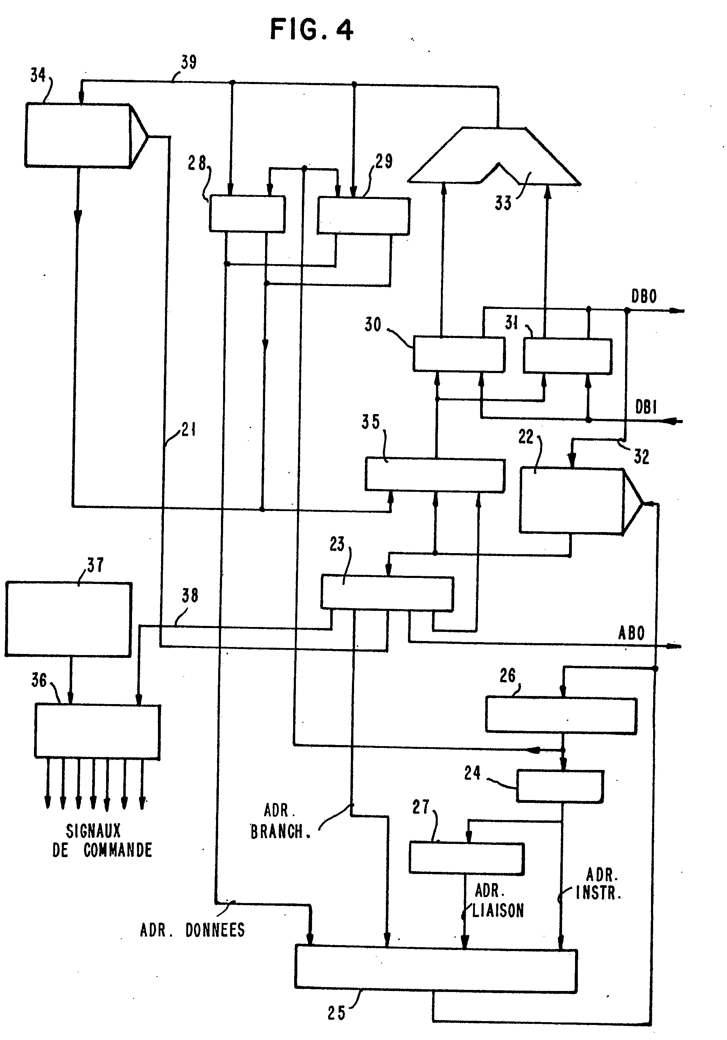

En se reportant à la figure 4, on voit que celle-ci représente les éléments de transfert de données principaux et leurs interconnexions dans le cas d'un microprocesseur à hautes performances amélioré. A certaines exceptions mineures près, ce même type général de construction de microprocesseur est présenté et décrit dans le brevet des Etats-Unis d'Amérique n° 4 038 642. Le microprocesseur de la figure 4 comprend une unité d'emmagasinage principale 22 pour l'emmagasinage d'instructions de programme et de données. Un programme est exécuté par la lecture de ses instructions dans l'unité d'emmagasinage principale 22, d'une manière séquentielle et leur placement, une par une dans un registre d'instruction 23. Ce registre d'instruction 23 correspond au registre d'instruction 15 de la figure 1.

A l'exception des instructions de branchement, l'adresse de l'instruction suivante se trouve dans un registre d'adresse d'instruction 24. Pendant l'exécution de l'instruction courante dans le registre d'instruction 23, l'adresse de l'instruction suivante dans le registre 24 est placée dans un registre d'adresse de mémoire 25 afin d'adresser l'instruction suivante dans la mémoire principale 22. L'adresse dans le registre 25 est transférée aux circuits d'adressage de la mémoire principale 22 pendant l'exécution de l'instruction courante pour assurer une pré-extraction de l'instruction suivante. En d'autres termes, l'instruction suivante est extraite pendant le cycle au cours duquel l'instruction courante est exécutée. Lorsque l'adresse dans le registre 25 est transférée aux circuits d'adressage de la mémoire principale 22, elle est également incrémentée par une unité d'incrémentation 26 et l'adresse incrémentée est placée dans le registre 24 pour fournir l'adresse de l'instruction suivante.

Si une instruction de branchement est placée dans le registre d'instruction 23, une adresse de branchement est alors délivrée depuis le registre d'instruction 23 (ou depuis le registre 28) au registre 25 afin d'extraire l'instruction suivante. Si l'on désire un retour ultérieur au point de branchement original, le contenu du registre 24 sera alors, à cet instant, placé dans un registre de liaison 27 pour permettre un retour ultérieur à l'instruction faisant suite au point du programme à partir duquel le branchement a été effectué.

Dans le but de lire ou d'écrire des données dans la mémoire principale 22, l'adresse des données est, dans ces cas, obtenue soit à partir d'un registre d'adresses de données 28 ou d'un registre d'adresse de données auxiliaire 29. L'adresse obtenue à partir du registre 28 ou du registre 29 est placée dans le registre 25, puis transférée aux circuits d'adressage de la mémoire principale 22. En même temps, cette adresse est incrémentée par l'unité d'incrémentation 26 et l'adresse incrémentée est renvoyée au registre d'adresse approprié 28 ou 29 d'où l'adresse non incrémentée avait été obtenue. Ainsi, le registre 28 (ou le registre 29) assure la même fonction pour les données que celles assurées par le registre 24 pour les instructions.

Le microprocesseur de la figure 4 communique avec le monde extérieur au moyen de trois groupes de conducteurs, à savoir, un groupe de conducteurs d'entrée de données (DBI), un groupe de conducteurs de sortie de données (DBO) et un groupe de conducteurs de sortie d'adresses (ABO). Le groupe de conducteurs de sortie d'adresses délivre un code à plusieurs bits (par exemple à 8 bits) qui est utilisé pour sélectionner le registre extérieur ou autre élément de circuit dont les données doivent être placées sur le groupe de conducteurs d'entrée de données ou, alternativement, qui doit recevoir les données présentes sur le groupe de conducteurs de sortie de données.

Les données entrant, reçues sur le groupe de conducteurs d'entrée de données sont placées dans le registre 30 et dans le registre 31. A partir de là, les données entrantes peuvent être délivrées directement à la mémoire principale 22 par le conducteur 32 ou délivrée au moyen d'une unité arithmétique et logique 33 à une unité d'emmagasinage locale 34. La mémoire locale 34 est formée d'une pile de registres de travail adressables pour retenir temporairement les données ou autres opérandes pendant leur manipulation par le microprocesseur. La mémoire locale 34 est adressée au moyen d'un ou de champs d'adresse appropriés contenus dans l'instruction se trouvant dans le registre d'instruction 23 et transféré par 21 aux circuits d'adressage de cette mémoire. Pour un fonctionnement « registre à registre » classique, l'instruction comprendra deux champs d'adresses d'emmagasinage local, un pour chacun des deux opérandes qui doivent être impliqués dans l'opération.

Les données (ou autres opérandes) contenues dans la mémoire locale 34 sont lues au moyen d'un circuit d'assemblage 35 et sont placées dans l'un ou l'autre des registres 30 et 31. Dans le cas d'une instruction d'addition arithmétique, par exemple, le contenu du registre 30 est ajouté au contenu du registre 31 par l'unité 33 et le résultat est ré-emmagasiné dans la mémoire locale 34. Alternativement, au moyen de l'instruction appropriée, le contenu du registre 30 et celui du registre 31 peuvent être placés sur le groupe de conducteurs de sortie de données DBO pour être transférés au registre approprié dans l'équipement auquel le microprocesseur est connecté. Il est encore possible que les contenus du registre 30 et du registre 31 puissent être transférés au moyen de l'instruction appropriée à la mémoire principale 22 par l'intermédiaire du conducteur d'emmagasinage 32.

Lorsque les données sont lues dans la mémoire principale 22, elles sont délivrées au moyen d'un assembleur 35 au registre 30 et au registre 31. A partir de là, les données peuvent être délivrées au moyen de l'unité 33 et des conducteurs 39 à la mémoire locale 34 ou alternativement, peuvent être placées sur le groupe de conducteurs de sortie de données DBO à partir du registre 30 et du registre 31.

Chaque instruction mise en place dans le registre d'instruction 23 comprend un champ de code d'opération. Ce champ est délivré par le conducteur 38 à un décodeur 36 qui reçoit également les impulsions de chronologie T0 à T11 à partir du générateur de chronologie 37. Le décodeur 36 décode le code d'opérations et délivre les signaux de commande appropriés, aux moments appropriés, aux diverses portes de commande de transfert de données (non représentées) et aux registres appropriés pour l'obtention du mouvement désiré des données ou autres opérandes pour cette instruction particulière. Au moment opportun, le décodeur 36 délivre également les signaux appropriés à l'unité 33 pour lui indiquer qu'elle doit effectuer une addition ou une soustraction ou toute autre opération logique.

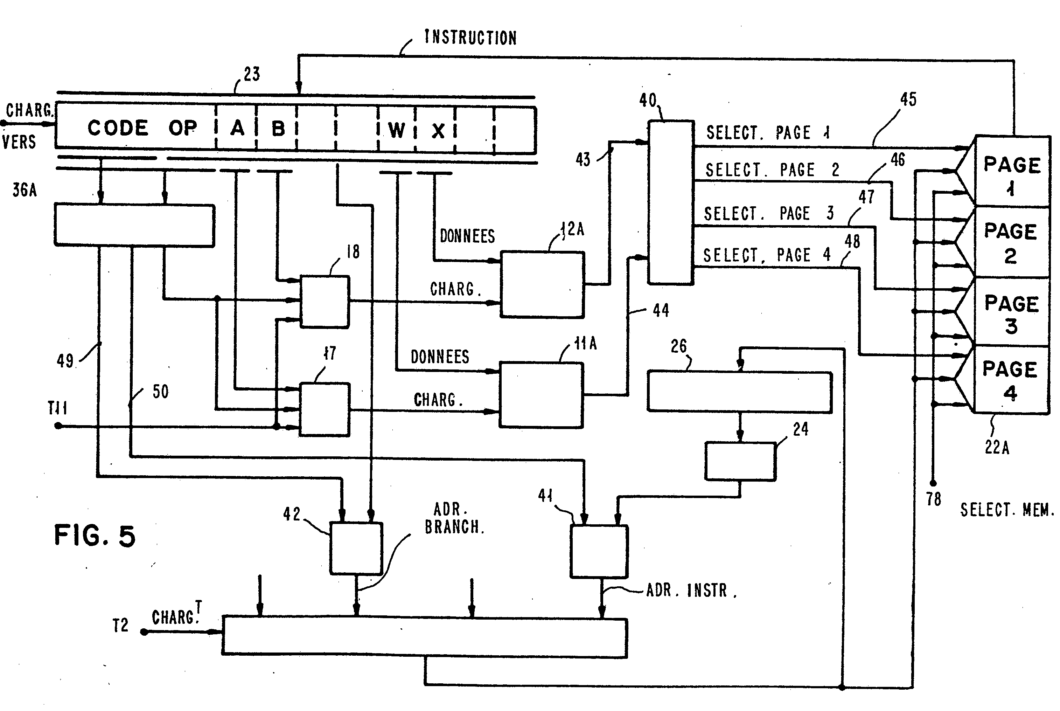

En se reportant à la figure 5, on voit comment le dispositif programmable de verrouillage de signaux de commande de la figure 1 peut être appliqué au microprocesseur de la figure 4 afin d'étendre la plage d'adressage de mémoire du microprocesseur et de la rendre quatre fois plus importante que dans la figure 4. En particulier, l'unité d'emmagasinage principale ou sous-système d'emmagasinage principal 22A de la figure 5 comprend quatre zones d'emmagasinage, référencées page 1, page 2, page 3 et page 4, chacune de ces pages ayant une capacité d'emmagasinage correspondant à celle de l'unité d'emmagasinage principale 22 de la figure 4. Par exemple, on suppose que le registre d'adresse de mémoire de base 25 est un registre d'emmagasinage à douze bits retenant les douze bits contenus dans le champ d'adresse de mémoire des instructions qui comprennent un champ d'adresse de mémoire. En d'autres termes, on suppose que le microprocesseur offre une possibilité d'adressage de mémoire de base de douze bits. Ainsi, dans cet exemple, les registres 24 et 28 sont également des registres à douze bits.

Cette adresse de base à douze bits peut adresser une plage de mémoire de zéro à 4 095 multiplets, dans laquelle chaque multiplet comprend huit bits. Ainsi, dans cet exemple, chaque page de la mémoire principale 22A présente une capacité d'emmagasinage de 4 096 multiplets et cette capacité correspond à la possibilité d'adressage de mémoire maximum du registre d'adresse de mémoire de base 25.

Pour augmenter de quatre fois la possibilité d'adressage de mémoire, il est nécessaire d'utiliser deux des bascules de commande de la figure 1, ces bascules étant référencées 11A et 12A sur la figure 5. Ces bascules correspondent par exemple aux bascules 11 et 12 de la figure 1. Le chargement de ces bascules 11A et 12A de la figure 5 est respectivement commandé par les circuits ET 17 et 18 qui sont similaires aux circuits ET portant la même référence sur la figure 1. Le décodeur 36A peut être considéré comme étant une partie du décodeur 36 de la figure 4 à l'exception du fait qu'il présente en outre une possibilité du décodeur 16 de la figure 1 qui est de générer un signal de sortie lorsqu'un code d'opération de chargement de verrouillage de commande est détecté dans le registre d'instruction 23.

Les bascules programmables de commande 11A et 12A délivrent des signaux de commande d'adressage et le microprocesseur comporte des circuits de sélection de zones d'emmagasinage couplés au sous-système d'emmagasinage principal 22A et répondant à ces signaux de commande d'adressage pour déterminer la zone d'emmagasinage particulière ou page de mémoire qui est accédée. Ce circuit de sélection de zone d'emmagasinage comprend un décodeur 40 qui décode le code à deux bits délivré par les deux lignes de sortie 43 et 44 des circuits de verrouillage et excite une de ses quatre lignes de sortie 45, 46, 47 et 48 de sélection de page. Ces lignes de sortie de sélection de page du décodeur 40 conduisent à et sélectionnent différentes zones des zones de pages dans la mémoire principale 22A. Etant donné qu'une seule ligne des lignes de sélection de pages peut être excitée à un moment donné, une zone seulement des quatre zones d'emmagasinage possibles peut être accédée à cet instant. En d'autres termes, l'adresse d'emmagasinage dans le registre 25 n'est effective que pour la page d'emmagasinage particulière pour laquelle la ligne de sélection de page a été excitée. Ainsi, par exemple, si les sorties des bascules 11A et 12A délivrent un code à deux bits de 00, la ligne de sélection de la page 1 est excitée et l'adresse dans le registre 25 est transférée au circuit d'adressage de la page 1. Si, d'autre part, les sorties des bascules 11A et 12A délivrent une valeur de code de 01, la ligne de sélection de la page 2 est alors excitée et l'adresse dans le registre 25 est transférée au circuit d'adressage de la page 2. Des considérations similaires s'appliquent aux pages 3 et 4 pour les autres codes binaires de sortie de verrouillage possibles 10 et 11.

Lorsque l'on désire utiliser différentes pages de mémoire pendant l'exécution d'un programme, il est simplement nécessaire d'introduire des instructions de chargement de verrouillage de commande dans le programme aux points appropriés, les positions de bit A, B, W et X dans ces instructions présentant le codage approprié pour la sélection de la page de mémoire désirée. En cas de simple utilisation à des fins de sélection de pages de mémoire, l'instruction de chargement de verrouillage de commande peut être appelée d'une manière plus appropriée « instruction de sélection de page de mémoire ».

La capacité d'adressage de mémoire principale du microprocesseur peut être encore accrue en utilisant trois ou quatre bascules de commande à la place des deux représentées dans la figure 5. L'utilisation de trois bascules de commande permet la sélection de huit pages de mémoire principale tandis que l'utilisation de quatre bascules de commande permet la sélection de seize pages de mémoire principale. Dans ce cas, les troisième et quatrième bascules de commande et leurs circuits ET associés sont connectées de la manière représentée sur la figure 1, les sorties des trois ou quatre circuits de verrouillage conduisant au circuit de décodage étendu 40 capable de décoder soit un code à trois bits, soit un code à quatre bits et présentant d'une manière correspondante huit ou seize lignes de sortie de sélection de pages.

L'avantage obtenu en provoquant le chargement réel des bascules de commande à la fin ou près de la fin d'un cycle d'opération du système ou cycle-machine, pendant lequel l'instruction de chargement de verrouillage de commande se trouve dans le registre d'instruction, sera maintenant décrit. Cette description sera donnée relativement à l'exemple de la figure 5 dans laquelle le chargement réel de l'une ou des deux bascules de commande 11A et 12A est commandé par l'impulsion d'horloge T11 qui est délivrée à la troisième entrée des circuits ET 17 et 18, cette impulsion d'horloge T11 étant supposée être la dernière impulsion de chronologie du cycle-machine pour l'instruction de chargement de verrouillage de commande. L'utilisation d'une impulsion de chronologie apparaissant à la fin ou près de la fin du cycle-machine pour conditionner les bascules de commande a pour but de permettre l'achèvement d'un cycle de mémoire supplémentaire pendant lequel une instruction de branchement peut être mise en place dans le registre d'instruction 23 de façon à délivrer une adresse de branchement au registre d'adresse de mémoire 25 avant que le changement d'état de la bascule de commande ne fasse effet. Ceci permet non seulement à la page d'être changée mais également à l'adresse de la page d'être changée en même temps. En d'autres termes, les deux changements deviennent effectifs au même instant pour la même référence de mémoire même s'ils ont été effectués par deux instructions séquentielles.

En se reportant au schéma chronologique de la figure 6, on voit que le cycle N représente le cycle-machine pendant lequel l'instruction de chargement de verrouillage de commande se trouve dans le registre d'instruction 23 tandis que le cycle N + 1 représente le cycle suivant pendant lequel l'instruction de branchement se trouve dans le registre d'instruction 23. Comme indiqué par l'impulsion de chargement du registre 23 du cycle N (CHARGT 23 - 1ʳᵉ ligne de la figure 6), l'instruction de chargement de verrouillage de commande ou de sélection de page de mémoire est chargée dans le registre d'instruction 23 pendant l'intervalle de temps T0. Comme indiqué par la 2ᵉ ligne de la figure 6 (CHARGT 25), l'impulsion de chargement du registre 25 du cycle N charge le contenu du registre 24 dans le registre d'adresse de mémoire 25 à l'instant T2, en supposant que le décodeur 36A délivre la sortie de décodage appropriée, sur le conducteur 50, pour l'excitation de la porte de commande représentée par le circuit ET 41. Cette adresse du registre 24 est l'adresse de l'instruction suivante qui, dans ce cas, est l'instruction de branchement désirée pour le cycle N + 1. Comme indiqué par l'impulsion de sélection de mémoire du cycle N (SELECT. MEM. - 3ᵉ ligne de la figure 6), l'adresse dans le registre 25 est transférée au circuit d'adressage de la mémoire principale 22A à l'instant T8. Ceci amorce l'accès de la mémoire principale 22A et peu de temps après, l'instruction adressée apparaît à la sortie de la mémoire principale 22A. Ainsi, l'instruction suivante (à exécuter pendant le cycle N + 1) est extraite par anticipation pendant l'exécution de l'instruction courante pendant le cycle N.

Après avoir ainsi effectué l'extraction de l'instruction suivante au point où elle ne peut pas être affectée, l'une des bascules de commande 11A et 12A ou les deux, sont réellement chargées. Comme indiqué par l'impulsion de chargement de verrouillage de commande pour le cycle N (CHARGT. BASC. COMD. - 4ᵉ ligne de la figure 6), cette action se déroule à l'instant T11 qui se situe tout à la fin du cycle N. Ainsi, le changement des bascules de commande n'a pas d'effet avant un certain point ultérieur du cycle-machine suivant. Ainsi, l'instruction de branchement pour le cycle N + 1 est obtenue à partir de la même page de mémoire que l'instruction de chargement de verrouillage de commande pour le cycle N.

Comme indiqué par l'impulsion de chargement du registre 23 du cycle N + 1, l'instruction de branchement est mise en place dans le registre d'instruction 23 à l'instant T0 du cycle N + 1. Le décodeur 36A l'identifie comme une instruction de branchement et excite la ligne de sortie 49 et déconditionne la ligne de sortie 50. Ceci provoque l'excitation de la porte de commande représentée par le circuit ET 42 qui, à son tour, permet à l'adresse de mémoire de branchement contenue dans l'instruction de branchement de passer à l'entrée du registre d'adresse de mémoire 25. Comme indiqué par l'impulsion de chargement du registre 25, cette adresse de branchement est mise en place dans le registre 25 à l'instant T2 du cycle N + 1. Cette adresse de branchement est ensuite transférée au circuit d'adressage de la mémoire principale 22A à l'instant T8, comme indiqué par l'impulsion de sélection de mémoire du cycle N + 1. A cet instant, le nouvel état des bascules de commande 11A et 12A a cependant fait effet si bien que cette adresse de branchement est transférée au circuit d'adressage pour la page nouvellement sélectionnée dans la mémoire principale 22A. Ainsi, non seulement la page est changée mais si on le désire, l'adresse interne de page ou de déplacement pour la nouvelle page l'est également, les deux changements prenant effet en même temps, à savoir, pendant l'accès à la mémoire commençant à l'instant T8 du cycle N + 1. Ainsi, l'instruction à exécuter pendant le cycle N + 2 (non représenté) est issue de la page de mémoire nouvellement sélectionnée et extraite par anticipation pendant le cycle N + 1.

Le brevet n° 78 36052 déposé en France par la demanderesse le 5 décembre 1978 décrit en détail un microprocesseur du type représenté sur la figure 4. Ce brevet présente également des bascules correspondant à la bascule 11A et à la bascule 12A de la figure 5 et décrit leur utilisation pour étendre la plage d'adressage de la mémoire principale. Il ne présente cependant pas le dispositif décrit ici pour conditionner ou restaurer les bascules. Mais il indique que la première bascule est conditionnée par une première instruction et est restaurée par une deuxième instruction et que la deuxième bascule est conditionnée par une troisième instruction et restaurée par une quatrième instruction. Il ne présente ni ne décrit les circuits ET 17 et 18 ou l'utilisation d'une instruction spéciale comportant les bits A, B, W et Z.

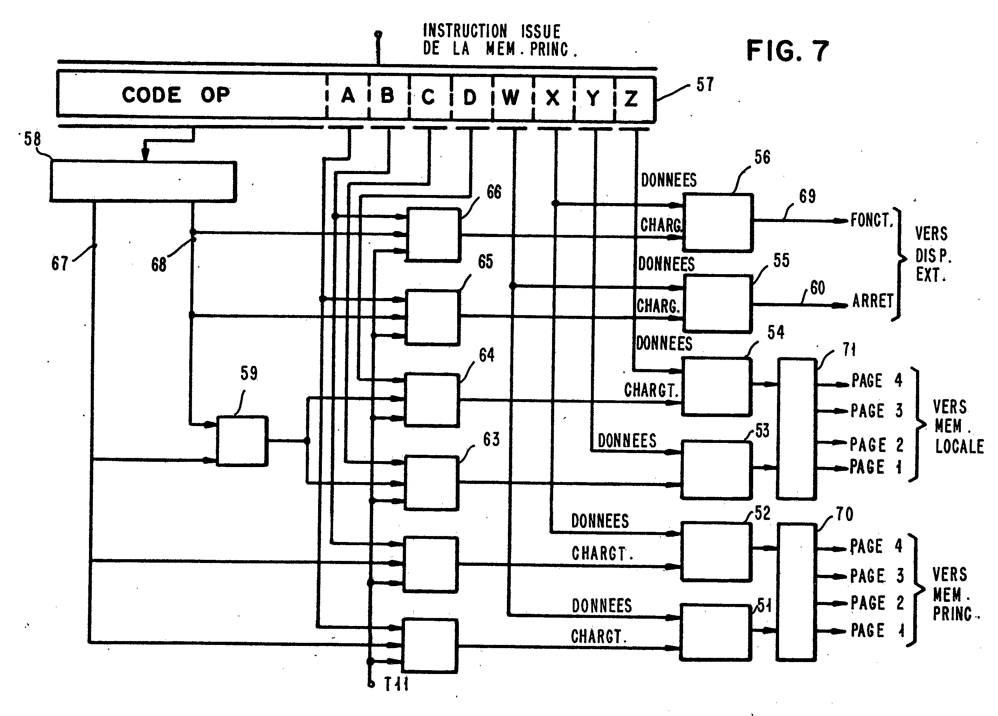

En se reportant maintenant à la figure 7, on voit que celle-ci représente une autre réalisation possible de la présente invention dans laquelle six bascules programmables de commande 51 à 56 peuvent être programmées en délivrant les instructions de chargement de verrouillage de commande appropriées au registre d'instruction 57. Dans ce cas, les instructions de chargement de verrouillage de commande présentant deux codes d'opération caractéristiques différents sont utilisés. L'un de ces codes d'opération indique une instruction de chargement d'un premier ensemble et est détectée par un décodeur 58 pour générer un signal de décodeur sur la ligne de sortie 67 du décodeur. Le deuxième de ces codes d'opération caractéristiques indique une instruction de chargement d'un deuxième ensemble et est détectée par le décodeur 58 pour générer un signal de décodeur sur la ligne de sortie 68 du décodeur.

Dans la même réalisation, les bascules de commande 51 à 56 sont divisées en deux ensembles en chevauchement. Le premier ensemble est formé des bascules 51 à 54 et le deuxième ensemble est formé des bascules 53 à 56. La sortie du décodeur sur la ligne 67 est délivrée à la deuxième entrée des circuits ET 61 à 64 (pour les deux derniers circuits, par l'intermédiaire du circuit OU 59) afin de permettre à n'importe laquelle (ou à plusieurs) des quatres bascules 51 à 54 dans le premier ensemble d'être chargée, suivant les valeurs binaires se trouvant dans les positions de bits A, B, C et D de l'instruction. D'une manière similaire, la sortie du décodeur sur la ligne 68 est délivrée à un deuxième ensemble de circuits ET 63 à 66 (pour les deux premiers circuits, par le circuit OU 59) pour permettre à un (ou à plusieurs) des circuits de verrouillage 53 à 56 du deuxième ensemble d'être chargé, suivant, comme précédemment, les valeurs binaires contenues dans les positions de bits A, B, C et D de l'instruction. La valeur binaire particulière chargée dans n'importe quelle bascule donnée est déterminée par la valeur binaire dans l'une des positions de bits particulières W, X, Y et Z du registre d'instruction auquel son entrée de données est connectée. La chronologie du chargement de tous les circuits de verrouillage est commandée par l'impulsion de chronologie T11 qui est délivrée aux six circuits ET 61 à 66.

On a également représenté dans la figure 7 un exemple des diverses utilisations possibles des bascules programmables de commande 51 à 56. Dans cet exemple, les bascules 51 et 52 sont utilisées pour la sélection de pages de mémoire principale. Telles quelles, leurs sorties sont connectées à un décodeur 70 dont les quatre lignes de sortie de sélection de pages conduisent à un sous-système de mémoire principale tel que le sous-système de mémoire principale 22A de la figure 5.

Dans l'exemple représenté, les bascules de commande 53 et 54 sont utilisées pour la sélection de pages de mémoire locale. Telles quelles, leurs sorties sont connectées à un décodeur 71 et les quatre lignes de sortie de sélection de pages du décodeur 71 conduisent aux circuits d'adressage d'une unité d'emmagasinage locale telle que ceux de la mémoire locale 34 de la figure 4. Dans ce cas, la mémoire locale 34 serait quatre fois plus importante qu'à l'origine. La taille originale peut avoir été prévue de façon à comprendre par exemple 32 registres de travail séparément adressables, cet ensemble de 32 registres pouvant être considéré comme formant une « page » de mémoire locale. Dans l'exemple de la figure 7, quatre de ces pages de mémoire locale peuvent être utilisées, la page qui est en cours d'utilisation à un moment quelconque donné étant déterminée par les états binaires des bascules de commande 53 et 54. Une telle structure de mémoire locale à pages permet à différentes pages de mémoire locale d'être prévues pour différentes opérations dans le microprocesseur, le résultat final étant la réduction du temps de traitement des données.

Dans l'exemple de la figure 7, les bascules de commande 55 et 56 et leurs sorties respectives 60 et 69 sont utilisées pour délivrer des signaux de commande pour la commande directe d'un ou de plusieurs dispositifs extérieurs qui peuvent être couplés ou associés au microprocesseur. Dans une autre application, les bascules de commande 55 et 56 pourraient être utilisées pour commander la sélection de fonctions internes de processeur. Par exemple, dans le microprocesseur de la figure 4, ces bascules de commande 55 et 56 pourraient être utilisées pour commander la sélection du registre d'adresse de données 28 ou du registre d'adresse de données auxiliaire 29 pour délivrer une adresse de données au registre 25.

Dans l'exemple de la figure 7, l'instruction chargement de bascule de commande comportant le premier code d'opération excitant la ligne 67 est utilisée pour changer la page de mémoire principale ou la page de mémoire locale ou les deux. L'instruction de chargement de bascule de commande comportant le deuxième code d'opération excitant la ligne 68, est d'autre part, utilisée pour changer la page de mémoire locale ou les signaux de commande délivrés au dispositif extérieur ou les deux.

L'exemple de la figure 7 a pour but d'illustrer la souplesse du dispositif programmable de verrouillage de signaux de commande de la présente invention. Diverses autres utilisations des bascules programmables de commande peuvent venir à l'esprit de l'homme de l'art et ne seront pas traitées ici. Il est suffisant de dire que la présente invention permet de réaliser un dispositif avantageux de construction relativement simple et directe permettant d'élargir les possibilités de commande et d'adressage de divers types de processeurs de données.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Dispositif programmable de verrouillage de signaux de commande dans un système de traitement de données comportant :

une mémoire (22A) contenant des instructions et leurs données correspondantes,

un registre d'instruction (15, 23) recevant de la mémoire les instructions à exécuter par le système,

des circuits de commande reliés au registre d'instruction pour commander le décodage des instructions par des circuits de décodage et leur exécution par une unité arithmétique et logique (33), suivant le code d'opération décodé,

ce dispositif étant caractérisé en ce qu'il comporte :

des circuits de verrouillage (11, 12, 13, 14), chacun de ces circuits ayant deux entrées (1 à 8), l'une (1, 3, 5, 7) recevant un signal de données binaire (W, X, Y, Z), l'autre (2, 4, 6, 8) recevant un signal de chargement commandant le chargement, dans le circuit de verrouillage, du signal de données binaire, la sortie de ce circuit de verrouillage délivrant au moins un signal de commande à des circuits de sélection d'un groupe de positions de mémoire ;

des circuits de liaison (1, 3, 5, 7) reliant chacune des entrées de données des circuits de verrouillage à une position d'un premier de deux groupes de positions de bits prédéterminées du registre d'instruction ;

des circuits logiques ET (17, 18, 19, 20) à trois entrées, en nombre égal au nombre de circuits de verrouillage, la première entrée étant reliée à une position du deuxième groupe de positions de bits prédéterminées du registre d'instruction, la deuxième entrée étant reliée au décodeur décodant le code d'opération de l'instruction contenue dans le registre d'instruction, la troisième entrée recevant un signal de chronologie, la sortie de chacun de ces circuits ET étant connectée à l'entrée de chargement d'un circuit de verrouillage correspondant de telle sorte qu'à un moment prédéterminé du cycle-machine du système les circuits de verrouillage désignés par les positions du deuxième groupe de positions binaires du registre d'instruction sont chargés avec les valeurs binaires désignées par les positions correspondantes du premier groupe de positions binaires quand un code d'opération prédéterminé est décodé par le décodeur.

2. Dispositif selon la revendication 1 caractérisé en ce que les sorties des circuits de verrouillage sont connectées à des circuits de sélection de mémoire pouvant sélecter l'un de plusieurs groupes de positions de mémoire constituant la mémoire principale du système, chacun de ces groupes représentant une capacité de mémoire correspondant à celle que permet d'adresser le registre d'adresse du système.

3. Dispositif selon la revendication 1, caractérisé en ce qu'il comporte :

trois groupes (51, 52 ; 53, 54 ; 55, 56) de circuits de verrouillage, chaque groupe comportant au moins un circuit de verrouillage et chacun de ces circuits ayant deux entrées, l'une recevant un signal de données binaire, l'autre recevant un signal de chargement commandant le chargement, dans le circuit de verrouillage du signal de données binaire, la sortie de ce circuit de verrouillage délivrant au moins un signal de commande à des circuits de sélection d'un groupe de positions de mémoires ;

des circuits de liaisons reliant l'entrée de données d'un circuit de verrouillage du premier groupe de circuits et l'entrée de données d'un circuit de verrouillage du deuxième groupe de circuits à une position d'un premier groupe de positions de bits prédéterminées du registre d'instruction, l'entrée de données d'un circuit de verrouillage du troisième groupe de circuits étant reliée à une autre des positions de bits de ce premier groupe de position de bits ;

trois groupes de circuits logiques correspondant aux circuits de verrouillage, chaque groupe comportant au moins un circuit logique ET à trois entrées, la troisième entrée recevant un signal de chronologie ;

la première entrée d'un circuit dans le premier groupe étant reliée à une position d'un deuxième groupe de positions de bits prédéterminées du registre d'instruction et la deuxième entrée étant reliée à une première sortie du décodeur décodant le code d'opération dans le registre d'instruction, de manière à délivrer, à un moment prédéterminé du cycle-machine du système, un signal de chargement au circuit de verrouillage correspondant du premier groupe de circuits de verrouillage quand un premier code d'opération est décodé par le décodeur de code d'opération ;

la première entrée d'un circuit dans le deuxième groupe de circuits logiques étant reliée à la même position de bit du registre d'instruction, dans le deuxième groupe de positions de bits, que celle utilisée pour le premier groupe de circuits logiques, la deuxième entrée étant reliée à une deuxième sortie du décodeur décodant le code d'opération dans le registre d'instruction, de manière à délivrer, à un moment prédéterminé du cycle-machine du système, un signal de chargement au circuit de verrouillage correspondant du deuxième groupe de circuits de verrouillage quand un deuxième code d'opération est décodé par le décodeur de code d'opération ;

la première entrée d'un circuit dans le troisième groupe de circuits logiques étant reliée à une autre position de bit du registre d'instruction, dans le deuxième groupe de positions de bits, la deuxième entrée étant reliée à la première et à la deuxième sortie du décodeur d'opération, de manière à délivrer, à un moment prédéterminé du cycle-machine du système, un signal de chargement au circuit de verrouillage correspondant du troisième groupe de circuits de verrouillage quand le premier ou le deuxième code d'opération est décodé par le décodeur de code d'opération.

4. Dispositif selon la revendication 3 dans un système de traitement de données comportant une mémoire principale, une mémoire locale et des dispositifs d'entrée/sortie de données, caractérisé en ce que les signaux de sortie du premier groupe de circuits de verrouillage commandent les dispositifs d'entrée/sortie de données, les signaux de sortie du deuxième groupe de circuits de verrouillage commandant les circuits d'adressage ou de sélection de pages de la mémoire principale, les signaux de sortie du troisième groupe commandent les circuits d'adressage ou de sélection de pages de la mémoire locale.

5. Dispositif selon l'une quelconque des revendications 1 à 3 caractérisé en ce que les signaux de sortie des circuits de verrouillage sont utilisés pour effectuer des sélections de pages de mémoire.

6. Dispositif selon l'une quelconque des revendications précédentes, caractérisé en ce que le signal de chronologie est envoyé sur la troisième entrée des circuits logiques à la fin ou près de la fin d'un cycle d'opération du système de façon que les changements éventuels d'adresses de blocs ou pages de mémoire et d'adresses internes de blocs ou de pages se rapportant à la même demande d'accès en mémoire soient effectifs en même temps dans le système même si ces changements ont été provoqués par deux instructions séquentielles.

**Claims**

1. A programmable control signal latch device in a data processing system comprising :

two storage position sets containing instructions and their corresponding data,

an instruction register (13, 23) receiving from the storage the instructions to be executed by the system,

control circuits coupled to the instruction register for controlling the decoding of instructions by decoding circuits and execution thereof by an arithmetic and logic unit (33) according to the decoded operation code ;

this device being characterized in that it comprises :

latch circuits (11, 12, 13, 14), each one of these circuits having two inputs (1 to 8), one input (1, 3, 5, 7) receiving a binary data signal (W, X, Y, Z) the other one (2, 4, 6, 8) receiving a load signal controlling the loading of the binary data signal in the latch circuit, the output of this latch circuit supplying at least one control signal to the selection circuits of a storage position set,

coupling circuits (1, 3, 5, 7) coupling each of the data inputs of the latch circuits to a position of a first of the two sets of predetermined bit positions of the instruction registrer,

logic AND circuits (17, 17, 19, 20) with three inputs, the number of which is equal to the number of the latch circuits, the first input being coupled to a position of the second set of predetermined bit positions of the instruction register, the second input being coupled to the decoder decoding the operation code of the instruction contained in the instruction register, the third input receiving a clock signal, the output of each of these AND circuits being connected to the load input of a corresponding latch circuit in such a way that, at a predetermined time of the system machine cycle, the latch circuits determined by the positions of the second binary position set of the instruction register are loaded with the binary values determined by the corresponding positions of the first binary position set when a predetermined operation code is decoded by the decoder.

2. A device according to claim 1, characterized in that the outputs of the latch circuits are connected to storage selection circuits which can select one of a plurality of storage position sets forming the main system storage, each one of these sets representing a storage capacity corresponding to that which the address register of the system can address.

3. A device according to claim 1, characterized in that it comprises :

three groups of latch circuits (51, 52 ; 53, 54 ; 55, 56), each group including at least one latch circuit and each one of these circuits having two inputs, one input receiving a binary data signal, the other one receiving a load signal controlling the loading of the binary data signal in the latch circuit, the output of this latch circuit supplying at least one control signal to selection circuits of a storage position set,

coupling circuits for coupling the data input of a latch circuit of the first circuit group and the data input of a latch circuit of the second circuit group to a position of a first set of predetermined bit positions of the instruction register, the data input of a latch circuit of the third circuit group being coupled to another one of the bit positions of this first bit position set,

three groups of logic circuits corresponding to the latch circuits, each group including at least one logic AND circuit with three inputs, the third input receiving a clock signal :

the first circuit input in the first group being coupled to a position of a second set of predetermined bit positions of the instruction register and the second input being coupled to a first output of the decoder decoding the operation code in the register instruction so as to supply, at a predetermined time of the system machine cycle, a load signal to the corresponding latch circuit of the first latch circuit group when a first operation code is decoded by the operation code decoder,

the first input of a circuit in the second logic circuit group being coupled to the same bit position of the instruction register in the second bit position set as that used for the first logic circuit group, the second input being coupled to a second output of the decoder decoding the operation code in the instruction register so as to supply, at a predetermined time of the system machine cycle, a load signal to the latch circuit corresponding to the second latch circuit group when a second operation code is decoded by the operation code decoder,

the first entry of a circuit in the thord logic circuit group being coupled to another bit position of the instruction register in the second bit position set, the second input being coupled to the first and the second outputs of the operation code decoder so as to supply, at a predetermined time of the system machine cycle, a load signal to the corresponding latch circuit of the third latch circuit group when the first or the second operation code is decoded by the operation code decoder.

4. A device according to claim 3, characterized in that the output signals of the first latch circuit group control the data input/output devices, the output signals of the second latch circuit group control the addressing or page selection circuits of the main storage, the output of the third group control the addressing or page selection circuits of the local storage.

5. A device according to any one of claims 1 to 3, characterized in that the output signals of the latch circuits are used to perform storage page selections.

6. A device according to any one of the preceding claims, characterized in that the clock signal is applied to the third input of the logic circuits at the end, or nearly at the end, of a system operation cycle in such a way that possible changes in the storage block or storage page addresses and the internal block or page addresses relating to the same storage access request are effective at the same time in the system even though these changes have been caused by two sequential instructions.

## Ansprüche

1. Programmierbare Vorrichtung zum Verriegeln von Steuersignalen in einem Datenverarbeitungssystem mit zwei Speicherstellengruppen, die die Befehle und ihre entsprechenden Daten enthalten, einem Befehlsregister (13, 23), das vom Speicher die vom System auszuführenden Befehle erhält sowie mit dem Befehlsregister verbundene Steuerschaltungen zum Steuern der Befehlsdecodierung durch Decodierschaltungen und der Befehlsausführung durch eine arithmetische und logische Einheit (33) gemäß dem decodierten Operationscode, gekennzeichnet durch Verriegelungsschaltungen (11, 12, 13, 14), von denen jede zwei Eingänge (1 bis 8) besitzt, von denen jeweils der eine (1, 3, 5, 7) zum Empfangen eines binären Datensignals (W, X, Y, Z) und jeweils der andere (2, 4, 6, 8) zum Empfangen eines Ladesignals vorgesehen sind, das in der Verriegelungsschaltung eine Speicherung des binären Datensignals steuert, wobei der Ausgang dieser Verriegelungsschaltung wenigstens ein Steuersignal an Auswahlschaltungen einer Speicherstellengruppe abgibt,

Verbindungsschaltungen (1, 3, 5, 7), die jeweils die Dateneingänge der Verriegelungsschaltungen mit einer Stelle einer ersten der zwei Gruppen von vorbestimmten Bitstellen des Befehlsregisters verbinden, wie eine der Anzahl der Verriegelungsschaltungen entsprechende Zahl logischer UND-Schaltungen (17, 18, 19, 20) mit drei Eingängen, wobei der jeweils erste Eingang mit einer Stelle der zweiten Gruppe von vorbestimmten Bitstellen des Befehlsregisters verbunden ist, der jeweils zweite Eingang mit dem den Operationscode des im Befehlsregister enthaltenen Befehls decodierenden Decodierer verbunden ist, der jeweils dritte Eingang ein Taktgebersignal erhält, und wobei der Ausgang einer jeden dieser UND-Schaltungen mit dem Ladeeingang einer entsprechenden Verriegelungsschaltung in der Weise verbunden ist, daß zu einem vorbestimmten Zeitpunkt des Maschinenzyklus des Systems die durch die Stellen der zweiten Gruppe von Binärstellen des Befehlsregisters bestimmten Verriegelungsschaltungen mit den Binärwerten geladen werden, die von den entsprechenden Stellen der ersten Gruppe von Binärstellen bestimmt werden, sobald ein vorbestimmter Operationscode vom Decodierer decodiert wird.

2. Vorrichtung nach Anspruch 1, dadurch gekennzeichnet, daß die Ausgänge der Verriegelungsschaltungen mit Speicherauswahlschaltungen verbunden sind, die eine von verschiedenen den Hauptspeicher des Systems bildenden Speicherstellengruppen auswählen können, wobei eine jede dieser Gruppen eine Speicherkapazität aufweist, die der entspricht, die das Adressregister des Systems adressieren kann.

3. Vorrichtung nach Anspruch 1, gekennzeichnet durch drei Verriegelungsschaltungsgruppen (51, 52 ; 53, 54 ; 55, 56), wobei jede Gruppe wenigstens eine Verriegelungsschaltung aufweist und eine jede dieser Verriegelungsschaltungen zwei Eingänge besitzt, von denen jeweils der eine ein binäres Datensignal und jeweils der andere ein Ladesignal empfängt, das in der Verriegelungsschaltung das binäre Datensignal steuert, und der Ausgang dieser Verriegelungsschaltung wenigstens ein Steuersignal an Auswahlschaltungen einer Speicherstellengruppe liefert,

Verbindungsschaltungen, die jeweils den Dateneingang einer Verriegelungsschaltung der ersten Schaltungsgruppe und jeweils den Dateneingang einer Verriegelungsschaltung der zweiten Schaltungsgruppe mit einer Stelle einer ersten Gruppe von vorbestimmten Bitstellen des Befehlsregisters verbinden, wobei jeweils der Dateneingang einer Verriegelungsschaltung der dritten Schaltungsgruppe mit einer andern der Bitstellen dieser ersten Bitstellengruppe verbunden ist,

drei den Verriegelungsschaltungen entsprechende logische Schaltungsgruppen, von denen jede Gruppe wenigstens eine UND-Schaltung mit drei Eingängen besitzt und der dritte Eingang ein Taktsignal erhält :

der jeweils erste Eingang einer Schaltung in der ersten Gruppe ist mit einer Stelle einer zweiten Gruppe von vorbestimmten Bitstellen des Befehlsregisters verbunden und der jeweils zweite Eingang ist mit einem ersten Ausgang des den Operationscode im Befehlsregister decodierenden Decodierers in der Weise verbunden, daß zu einem vorbestimmten Zeitpunkt des Maschinenzyklus des Systems die entsprechende Verriegelungsschaltung der ersten Verriegelungsschaltungsgruppe ein Ladesignal erhält, sobald ein erster Operationscode von dem Operationscode-Decodierer decodiert wird,

der jeweils erste Eingang einer Schaltung in der zweiten Gruppe logischer Schaltungen ist mit derselben Bitstelle des Befehlsregisters in der zweiten Bitstellengruppe verbunden wie die für die erste Gruppe logischer Schaltungen verwendete, der jeweils zweite Eingang ist mit einem zweiten Ausgang des den Operationscode im Befehlsregister decodierenden Decodierers in der Weise verbunden, daß zu einem vorbestimmten Zeitpunkt des Maschinenzyklus des Systems die entsprechende Verriegelungsschaltung der zweiten Verriegelungsschaltungsgruppe ein Ladesignal erhält, sobald ein zweiter Operationscode von dem Operationscode-Decodierer decodiert wird,

der jeweils erste Eingang einer Schaltung in der dritten Gruppe logischer Schaltungen ist mit einer anderen Bitstelle des Befehlsregisters in der zweiten Bitstellengruppe verbunden und der zweite Eingang ist mit dem ersten und zweiten Ausgang des Operationscode-Decodierers in der Weise verbunden, daß zu einem vorbestimmten Zeitpunkt des Maschinenzyklus des Systems die entsprechende Verriegelungsschaltung der dritten Verriegelungsschaltungsgruppe ein Ladesignal erhält, sobald der erste oder zweite Operationscode vom Operationscode-Decodierer decodiert wird.

4. Vorrichtung nach Anspruch 3, dadurch gekennzeichnet, daß die Ausgangssignale der ersten Verriegelungsschaltungsgruppe die Dateneingangs-Ausgangsvorrichtungen steuern, wobei die Ausgangssignale der zweiten Verriegelungsschaltungsgruppe die Adressier- oder Seitenauswahlschaltungen des Hauptspeichers steuern und die Ausgangssignale der dritten Gruppe die Adressier- oder Seitenauswahlschaltungen des lokalen Speichers steuern.

5. Vorrichtung nach einem der Ansprüche 1 bis 3, dadurch gekennzeichnet, daß die Ausgangssignale der Verriegelungsschaltungen zur Auswahl der Speicherseiten dienen.

6. Vorrichtung nach einem der vorhergehenden Ansprüche, dadurch gekennzeichnet, daß das Taktsignal am Ende oder fast am Ende eines Operationszyklus des Systems auf den jeweils dritten Eingang der logischen Schaltungen in der Weise gegeben wird, daß mögliche Änderungen der Block- oder Seitenadressen und der internen Block- oder Seitenadressen, die sich auf dieselbe Speicherzugriffsanforderung beziehen, gleichzeitig im System vorgenommen werden, selbst wenn diese Änderungen von zwei sequentiellen Befehlen hervorgerufen wurden.

FIG. 1

# FIG. 2

DONNEES

$\overline{ET}$

INV.

INV.

SORTIE

- CHARG$^T$

$\overline{ET}$

# FIG. 3

DONNEES

INV

ET

CONDIT.

BASC.

SORTIE

REST.

CHARG

ET

0 006 478

FIG. 4

FIG. 5

FIG. 6

FIG. 7